(19) Europäisches Patentamt
European Patent Office
Office européen des brevets

(11) Veröffentlichungsnummer: **0 292 869**
**B1**

(12) **EUROPÄISCHE PATENTSCHRIFT**

(45) Veröffentlichungstag der Patentschrift: **12.12.90**

(51) Int. Cl.⁵: **G09B 29/04,** B42D 15/04

(21) Anmeldenummer: **88108020.4**

(22) Anmeldetag: **19.05.88**

(54) **Faltblatt.**

(30) Priorität: **23.05.87 DE 8707414 U**

(43) Veröffentlichungstag der Anmeldung: **30.11.88 Patentblatt 88/48**

(45) Bekanntmachung des Hinweises auf die Patenterteilung: **12.12.90 Patentblatt 90/50**

(84) Benannte Vertragsstaaten: **AT BE CH DE ES FR GB IT LI LU NL SE**

(56) Entgegenhaltungen:
**EP-A- 0 212 405**
**AT-B- 26 638**

(73) Patentinhaber: **Lein, Ulrich, Walderstrasse 386, D-4010 Hilden(DE)**

(72) Erfinder: **Lein, Ulrich, Walderstrasse 386, D-4010 Hilden(DE)**

(74) Vertreter: **Plöger, Ulrich, Dipl.-Ing., Benrather Schlossallee 89, D-4000 Düsseldorf-Benrath(DE)**

**EP 0 292 869 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein rechteckiges Faltblatt der im Oberbegriff des Patentanspruchs 1 bezeichneten Art. Ein solches Faltblatt ist in AT-B 26 638 offenbart.

Ein derartiges Faltblatt ist nach dem DE-GM 68 07 085 für eine zweiseitig mit unterschiedlichen Maßstäben gedruckte Landkarte derart vorgesehen, daß bei vollständig geöffnetem Faltblatt die gesamte Landkarte in dem einen Maßstab sichtbar ist, während bei den auf das zentrale, ungefaltet bleibende Mittelteil zurückgefalteten Faltabschnitten der andere Kartenmaßstab sichtbar wird. Im gefalteten Zustand zeigt diese Landkarte noch ein Viertel der Fläche seines geöffneten Zustandes. Durch teilweise Faltungen läßt sich auch eine Zuordnung der Darstellung der Vorderseite mit der Darstellung der Rückseite vornehmen, wie beispielsweise bei Werbeprospekten, bei denen sich somit einem Bild ein Text zuordnen läßt. Indes sind die Zuordnungsmöglichkeiten bei diesem genannten Faltblatt begrenzt.

Allgemein sind Faltblätter bekannt, bei denen sich die Fläche bei jeder Auffaltung um eine Faltkante auf den doppelten Wert vergrößert. Dies führt zu großflächigen Auffaltungen, was vor allem bei begrenzten Platzverhältnissen, beispielsweise bei einem Fahrzeug, wenig praktikabel ist. Außerdem kann durch Auffalten jeweils nur eine Blattseite sichtbar gemacht werden. Bei doppelseitig gedruckten Blättern muß das aufgefaltete Blatt völlig gewendet werden, um die Rückseite sichtbar werden zu lassen.

Ferner gibt es Leporellos als Faltformate, bei denen eine zick-zack-förmige Faltung eines langgestreckten Bogens ein platzsparendes Zusammenlegen ermöglicht. Hierbei ist es aber von Nachteil, daß sich eine bildliche Darstellung immer in einer bevorzugten Richtung erstrecken muß, welchem Prinzip häufig die kartographische Genauigkeit weichen muß, so z.B. bei Leporellos von Flußläufen.

Der Erfindung liegt, vom einleitend genannten Stand der Technik ausgehend, die Aufgabenstellung zugrunde, das Faltblatt dahingehend weiterzuentwickeln, daß die Zahl der Zuordnungsmöglichkeiten eines aufgefalteten Faltabschnittes zu den übrigen Faltabschnitten wesentlich vergrößert wird. Die Anwendung soll insbesondere für die Präsentation von Darstellungen, beispielsweise zu Werbezwecken, verbessert werden, bei denen es darauf ankommt, häufig Teile einer Darstellung durch andere Teile zu ersetzen, so daß ein wechselnder bildlicher Eindruck gewonnen werden kann.

Die Erfindung löst diese Aufgabenstellung durch die in den Patentansprüchen gemachten Vorschläge.

Man kommt auf diese Weise zu einem Faltblatt, welches sich im einfachsten Falle durch lediglich vier Faltungen zusammenfalten bzw. völlig öffnen läßt. Bei teilweiser Öffnung lassen sich unter Einfaltung der jeweiligen randseitigen bzw. eckseitigen Faltabschnitte in einer erheblich vergrößerten Anzahl Zuordnungen vornehmen. Insbesondere lassen sich die Vorder- und die Rückseite des Faltblattes verstärken, so daß sich eine buchartige Zusammenfaltung ergibt, bei der indes die einzelnen Blätter nicht durch Aufschlagen gewechselt werden, sondern durch entsprechendes Auf- und Umfalten. Durch Verstärkung und Bezeichnung der Vorder- und der Rückseite erreicht man weiterhin, daß beim Zusammenlegen und Auseinanderfalten Einteilungsfehler vermieden werden.

Durch das erfindungsgemäße Aufschneiden je einer der beiden Faltkanten der eckseitigen Faltabschnitte bleiben letztere mit ihren verbleibenden Faltkanten in Verbindung mit einem randseitigen Faltabschnitt, um den sie sich beim Zusammenfalten notwendigerweise umlegen lassen. Dies fördert die Übersichtlichkeit beträchtlich.

Eine sehr interessante Weiterentwicklung der Erfindung besteht darin, daß das ursprüngliche Rechteckformat wenigstens an einer seiner Randseiten eine zick-zack-förmige Faltung aufweist, deren Faltabschnitte sich an die entsprechende Randseite anschließen und in Verlängerung der Aufschnitte der randseitigen Faltabschnitte ihrerseits aufgeschnitten sind. Dies führt zu einem teilweise leporelloartigen Faltblatt, so daß die Darstellungsmöglichkeiten auch bei sehr langgestreckten Objekten, bei längeren Texten oder dergl. gegeben sind.

Um ein Zusammenfalten in der vorgesehenen Weise zu gewährleisten, werden zweckmäßig zwei nebeneinanderliegende, randseitige Faltabschnitte verstärkt als Vorderseite bzw. als Rückseite eines Faltstapels ausgebildet. Insbesondere können diese Faltabschnitte entsprechende Markierungen aufweisen, so daß für den Benutzer die zutreffende Zusammenfaltung erkennbar wird.

Da dies erfindungsgemäße Faltblatt aus mindestens 16 Faltabschnitten besteht, die teilweise aufgeschnitten sind, kann die Zusammenfaltung gelegentlich erschwert sein. Dem Benutzer wird eine wirkungsvolle Unterstützung hierbei dadurch zuteil, daß nach einem weiteren Merkmal der Erfindung durch die Ausbildung der Faltkanten vorgegeben wird, ob die angrenzenden Faltabschnitte in einer Richtung oder in beiden Richtungen faltbar sein sollen. Um dies zu erreichen, werden Verstärkungsbeschichtungen in bestimmter Weise verwendet, die häufig ohnehin erforderlich sind, um die notwendige Stabilität zu gewährleisten, oder um als Bild- bzw. Schriftträger genutzt zu werden.

Diese Verstärkungsbeschichtungen werden im Bereich der vier Faltabschnitte des zentralen Teils lediglich bei den beiden beim Zusammenfalten außen liegenden Faltabschnitten ausgeführt, wobei sie in der Faltkante einen Spalt mit derartigem Abstand aufweisen, daß die Kanten der Beschichtung in aufgefaltetem Zustand aneinanderstoßen. Ein Auffalten in rückwärtiger Richtung wird auf diese Weise ausgeschlossen. Gleichfalls wird der Benutzer hierdurch angehalten, zunächst die nicht verstärkten Faltabschnitte und erst danach die beschichteten Faltabschnitte zu falten.

Im Gegensatz zu den behandelten vier Faltabschnitten des zentralen Teils sind die übrigen Faltabschnitte erfindungsgemäß mit einer beidseitigen Verstärkungsbeschichtung versehen. Diese Verstärkungsbeschichtungen haben im Bereich der Faltkanten Abstände voneinander, die ihrer doppelten Dicke entsprechen. Somit lassen sich derartige Faltabschnitte in beiden Richtungen falten, was im Ergebnis dazu führt, daß, die Faltabschnitte der Vorderseite und der Rückseite ausgenommen, in aufgeklapptem Zustand jeder Faltabschnitt der einen Seite jedem Faltabschnitt der anderen Seite gegenübergestellt werden kann, wobei sich der Benutzer nicht im Unklaren darüber ist, ob er eine Faltung in beiden Richtungen oder in nur einer Richtung ausführen darf. Mechanische Beschädigungen der Verstärkungsbeschichtungen werden durch gerundete Kanten derselben zweckmäßig ausgeschaltet.

Um im aufgeklappten Zustand zwei sich gegenüberliegende Faltabschnitte vorübergehend unverändert zu lassen, lassen sich unbeabsichtigte Faltungen verhindern, wenn auf die Kanten Profilstäbe von U-förmigem Querschnitt geschoben werden, die die Faltkanten benachbarter Faltabschnitte praktisch überbrücken.

Zur weiteren Veranschaulichung der Erfindung wird auf die sich auf Ausführungsbeispiele beziehenden Zeichnungen Bezug genommen. Darin zeigen:

Figur 1: ein erfindungsgemäßes Faltblatt in voll ausgefaltetem Zustand,
Figur 2: ein erfindungsgemäßes Faltblatt mit Angabe der Faltrichtungen,
Figur 3: eine einseitige Verstärkungsbeschichtung,
Figur 4: eine zweiseitige Verstärkungsbeschichtung und
Figur 5: aneinander angrenzende Faltabschnitte mit einem Profilstück.

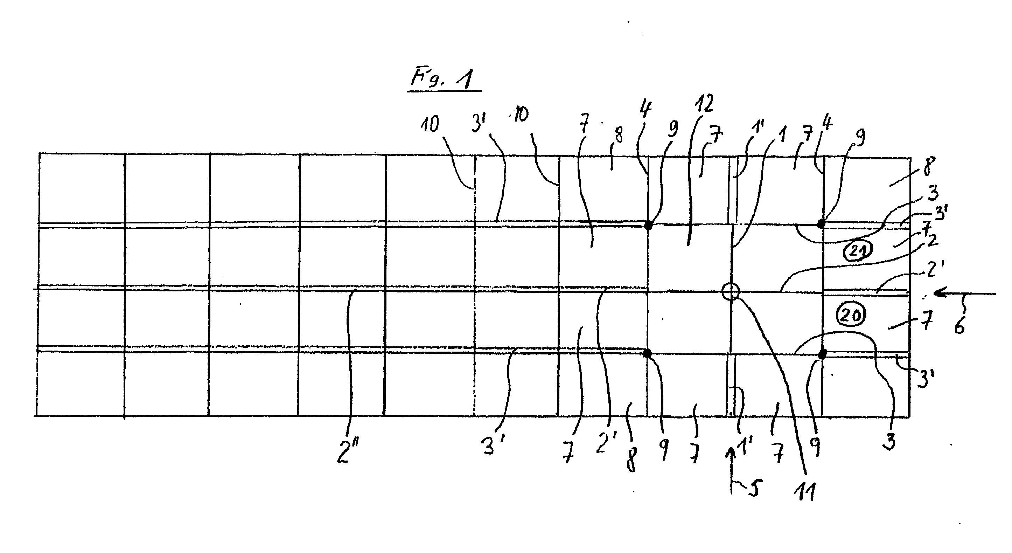

Das in Figur 1 dargestellte langgestreckte Rechteckformat zeigt in einfacher Linienführung Faltkanten und in doppelter Linienführung aufgeschnittene Kanten.

Entsprechend dem rechten Teil des Bildes erkennt man die beiden zunächst vorzunehmenden Mittenfaltungen 1 und 2, die sich rechtwinklig im Punkt 11 schneiden. Sie verlaufen dabei entsprechend den Richtungen 5 und 6. Die sich anschließenden Mittenfaltungen 3 und 4 führen zu vier Kreuzungspunkten in den Innenecken 9. Die in die Randbereiche hinein verlängerten Faltkanten 1′ und 2′ sind aufgeschnitten. Weiterhin sind die in dem linken Teil der Zeichnung verlängerten Faltkanten 3 entsprechend 3′ aufgeschnitten. Die in den linken Teil der Zeichnung verlängerte aufgeschnittene Faltkante 2′ ist entsprechend 2″ im linken Teil aufgeschnitten.

Der zentrale Teil des Faltblattes, der sich aus den an dem Mittelpunkt 11 angrenzenden Faltabschnitten 12 ergibt, ist von den randseitigen Faltabschnitten 7 und den eckseitigen Faltabschnitten 8 umgeben. Die beiden oberen randseitigen Faltabschnitte 7 sind jeweils als Vorderseite bzw. als Rückseite ausgeführt, um bei zusammengelegtem Faltblatt Boden und Deckel zu bilden. Man erkennt insbesondere, daß sich die jeweils äußeren Faltabschnitte zur Mitte hin falten lassen, wobei die sich im linken Teil horizontal anschließenden Faltabschnitte zick-zack-förmig nach Art eines Leporellos zusammengefaltet werden können. Im Ergebnis führt dies zu einem zusammengelegten Faltblatt, dessen Größe derjenigen eines Faltabschnittes gleich ist. Die einzelnen Faltabschnitte lassen sich vorderseitig sowie rückseitig durch leichte Faltoperationen herstellen, wie beschrieben wurde. Die zick-zack-förmigen Faltkanten 10 werden im Zeichnungsbeispiel von 9eschnittenen Faltkanten gekreuzt. Es ist jedoch auch möglich, auf den Aufschnitt bei einer der Faltkanten 3′ zu verzichten und stattdessen die angrenzende Faltkante 10 im Ausmaß eines Faltabschnittes zu schneiden, so daß man den zick-zack-förmigen Ansatz ganz oder teilweise gefaltet zusammenlegen kann, was die Handhabbarkeit häufig fördert.

Die in der Zeichnung linken, randseitigen Faltabschnitte 7 sind zusätzlich mit 20, 21 bezeichnet. Der Faltabschnitt 20 läßt sich als Vorderseite und der Faltabschnitt 21 als Rückseite eines Faltstapels ausbilden, der bei entsprechender Kennzeichnung leicht derart zu bilden ist, daß er sich wie ein Buch öffnen läßt, weil man dann, die Vorderseite und Rückseite ausgenommen, in der beschriebenen Weise jeder Seite eine Hälfte der beliebigen Seite der anderen Hälfte zuordnen kann.

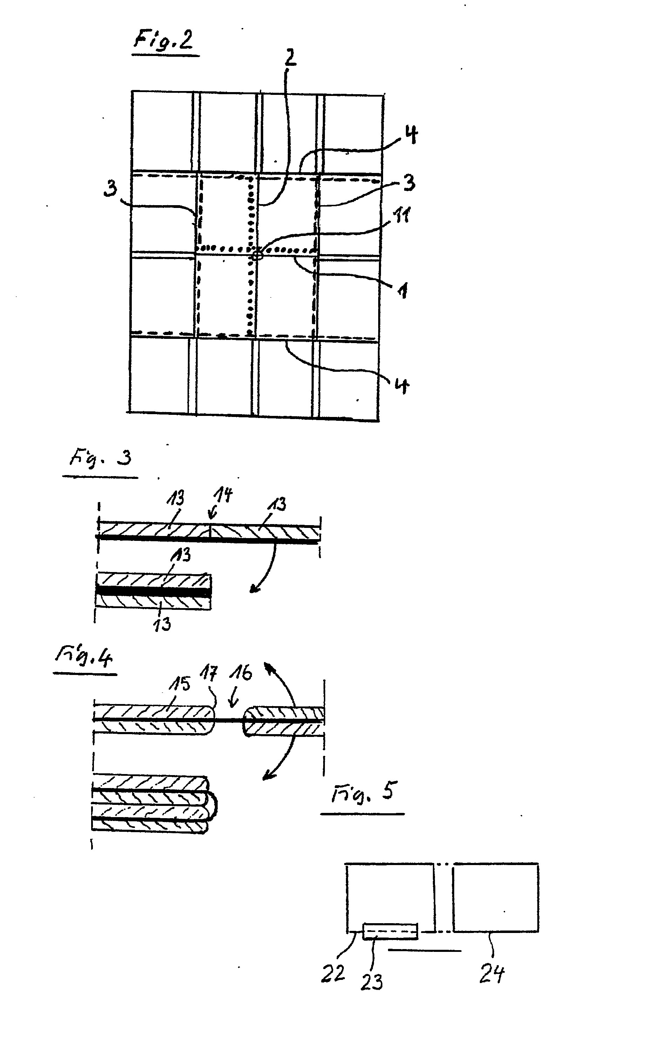

Die Faltungen werden gemäß Figur 2 dadurch erleichtert, daß sie richtungsabhängig ausführbar sind. Der rechte Teil der Figur 1 ist bei Figur 2 zu diesem Zweck lediglich bezüglich seiner Faltkanten dargestellt. Die stark punktierten Linien besagen, daß man die ihnen entsprechenden Faltkanten in nur einer Richtung bilden kann, wohingegen die stark gestrichelten Linien zum Ausdruck bringen sollen, daß bei dieser Linie Faltkanten in beiden Richtungen möglich sind. Demnach sind die in einer Richtung möglichen Faltungen für die Faltkanten 1 uns 2 charakteristisch, hingegen für die Faltkanten 3 und 4 die Faltungen in beiden Richtungen vorzunehmen sind, um die erwähnten Zuordnungen feststellen zu können.

Figur 3 zeigt die Vornahme von Verstärkungsbeschichtungen bei den beiden Faltabschnitten 12, die entweder durch die Faltkanten 1 oder durch die Faltkanten 2 verbunden sind, wodurch sie also lediglich nur in einer Richtung faltbar sein sollen. Die Verstärkungsbeschichtungen 13 sind dabei entlang der zugehörigen Faltkante zerbrochen, jedoch in gestrecktem Zustand nahezu spaltfrei ausgeführt. Dies führt dazu, daß die Faltung lediglich in Richtung des dargestellten Bogenpfeils möglich ist, so daß man dann zu einer Anordnung kommt, wie sie der untere Teil der Figur 3 erkennen läßt. Die Verstärkungsbeschichtungen 13 klaffen demnach in gefaltetem Zustand auseinander und im gefalteten Zustand stoßen sie dagegen aneinander.

Die Darstellung der Figur 4 zeigt die beidseitige Verstärkungsbeschichtung 15 mit der Ausbildung eines Spaltes 16, der von doppelter Breite wie die Dicke der Verstärkungsbeschichtungen 15 ist. Dies gestattet eine Verschwenkung der Faltung in beiden Richtungen der Bogenpfeile, so daß man in zusammengefaltetem Zustand entsprechend dem unteren Teil der Figur 4 dazu kommt, daß die benachbarten Verstärkungsbeschichtungen 15 aufeinander liegen können, wohingegen das wesentlich dünnere Material des Faltblattes eine Umlenkung um 180° erfährt.

Das Material für das Faltblatt einerseits und für die Verstärkungsbeschichtung andererseits kann in weiten Grenzen frei gewählt werden. Für die Ausführung des Faltblattes selbst ist ein biegsames, relativ dünnes Material erforderlich, wohingegen das für die Verstärkungsbeschichtungen 13 bzw. 15 vorgesehene Material Platten- oder Tafelform haben kann. Dabei muß es nicht notwendigerweise biegsam sein. Um bei der Benutzung Beschädigungen der Verstärkungsbeschichtungen im Kantenbereich auszuschließen, sind dort, wie Figur 4 zeigt, Rundungen 17 vorgesehen.

Die Faltabschnitte können im übrigen auch aus durchsichtigem Material bestehen, und zwar insbesondere aus Klarsichtfolien, so daß auch Zuordnungen möglich sind, bei denen mehrere Faltabschnitte übereinanderliegend sichtbar werden. Entsprechende Klarsichtfolien können auch noch von außen an die Faltabschnitte zum Einklappen angesetzt werden.

Die Faltkanten müssen nicht notwendigerweise durch Verwendung flexiblen Materials gebildet werden. Sie lassen sich auch in sinngemäßer Anwendung der Erfindung durch Klavierbänder oder durch Ringgelenke verwirklichen. Maßgeblich ist hierfür der jeweilige Verwendungszweck des erfindungsgemäßen Faltblattes. Wenn beispielsweise die Faltabschnitte von schweren Platten gebildet sind, würden sich als Faltkanten zweckmäßig dauerhafte Scharniergelenke versehen lassen.

Bisweilen ist es zweckmäßig, die beiden Hälften eines aufgefalteten Faltstapels in ihrer Lage vorübergehend zu fixieren. Dem dient ein im Querschnitt U-förmiges Profilstück 23, daß gemäß Figur 5 von einer Faltkante 22 der einen Hälfte des Faltstapels auf die angrenzende Faltkante 24 der zugehörigen Hälfte des Faltstapels brückenartig verschoben werden kann.

## Patentansprüche

1. Rechteckiges Faltblatt, das durch mehrfache, sich rechtwinklig kreuzende Faltkanten (1, 2, 3) sowie durch Aufschnitte (1′, 2′) zusammenlegbar ist, die von den Seitenmitten eines rechteckigen, zentralen Teils ausgehen, das von randseitigen und eckseitigen Faltabschnitten (7, 8) umgeben ist, während das zentrale Teil sich in seiner Mitte (11) kreuzende Faltkanten (1, 2) zwischen zwei sich gegenüberliegenden Aufschnitten (1′, 2′) aufweist dadurch gekennzeichnet, daß die eckseitigen Faltabschnitte (8) mit jeweils einer aufgeschnittenen Faltkante (3′) ausgeführt sind.

2. Rechteckiges Faltblatt nach Anspruch 1, dadurch gekennzeichnet, daß sich an einer Randseite des zentralen Teils eine zick-zack-förmige Faltung (10) anschließt, deren Faltkanten in Verlängerung der Aufschnitte zwischen den Faltabschnitten (7,8) gleichfalls aufgeschnitten sind.

3. Rechteckiges Faltblatt nach den Ansprüchen 1 und 2, dadurch gekennzeichnet, daß zwei nebeneinander liegende, randseitige Faltabschnitte (7) verstärkt und als Vorderseite (20) bzw. Rückseite (21) eines Faltstapels ausgeführt sind.

4. Rechteckiges Faltblatt nach einem oder mehreren der Ansprüche 1 bis 3, dadurch gekennzeichnet, daß von den vier Faltabschnitten (12) des zentralen Teils die beiden bei seinem Zusammenfalten außen liegenden Faltabschnitte eine oberseitige Verstärkungsbeschichtung (13) tragen, die in der Faltkante (1) einen Spalt (14) mit derartigem Abstand aufweisen, daß die Beschichtungskanten nach aufgefaltetem Zustand aneinanderstoßen.

5. Rechteckiges Faltblatt nach einem oder mehreren der Ansprüche 1 bis 4, dadurch gekennzeichnet, daß die an das zentrale Teil angrenzenden Faltabschnitte (7,8) beidseitig Verstärkungsbeschichtungen (15) tragen, die in den Faltkanten (3,4,10) Spalten (16) bilden, deren Breite etwa der doppelten Dicke der Verstärkungsbeschichtungen (15) entspricht.

6. Rechteckiges Faltblatt nach Anspruch 5, dadurch gekennzeichnet, daß gleichfalls die zwischen den Faltkanten (10) liegenden Faltabschnitte die beidseitigen Verstärkungsbeschichtungen (15) tragen.

7. Rechteckiges Faltblatt nach den Ansprüchen 5 und 6, dadurch gekennzeichnet, daß die Verstärkungsbeschichtungen (15) gerundete Kanten (17) aufweisen.

8. Rechteckiges Faltblatt nach einem oder mehreren der Ansprüche 1 bis 7, dadurch gekennzeichnet, daß auf die Kanten (22) einer Hälfte des zusammengeklappten Faltstapels U-förmige Profilstücke (23) von etwa der Faltkantenlänge aufgeschoben sind, die auf die angrenzenden, sich im aufgeklapptem Zustand darbietenden Faltkanten (24) der anderen Hälfte des Faltstapels aufschiebbar sind.

## Claims

1. Rectangular folder, collapsible by means of several folding edges (1, 2, 3, 4) intersecting at right angles as well as by means of slits (1′, 2′), which start from the lateral centre points of a rectangular, central part, which is surrounded by edge-side and corner-side folding sections (7, 8), whereas the central part features folding edges (1, 2) intersecting at its centre (11) between two opposite slits (1′, 2′) characterized in that the corner-side folding sections (8) are designed with a slit folding edge (3′) each.

2. Rectangular folder according to claim 1, characterized in that a zigzagging folding (10) is adjacent to the edge side of the central part, the folding edges of which are also slit in extension of the slits between the folding sections (7, 8).

3. Rectangular folder according to claims 1 and 2, characterized in that two adjacent, edge-side folding sections (7) are reinforced and designed as foreside (20), respectively, back side (21) of a folding stock.

4. Rectangular folder according to one or several of the claims 1 to 3, characterized in that both of the four folding sections (12) of the central part which are at the outside carry a reinforcing coating (13), and feature a gap (14) in the folding edge (1) of such spacing that the coating edges are contiguous in unfolded condition.

5. Rectangular folder according to one or several of the claims 1 to 4, characterized in that the folding sections (7, 8) adjacent to the central part carry reinforcing coatings (15) on both sides, which form gaps (16) in the folding edges (3, 4, 10), the width, of which corresponds approximately to the double thickness of the reinforcing coatings (15).

6. Rectangular folder according to claim 5, characterized in that the folding sections between the folding edges (10) also carry the two-sided reinforcing coatings (15).

7. Rectangular folder according to claims 5 and 6, characterized in that the reinforcing coatings (15) feature radiussed edges (17).

8. Rectangular folder according to one or several of the claims 1 to 7, characterized in that U-shaped pieces (23) of approximately the folding edge length are slipped on the edges (22) of one half of the folded folding stock, which can be slipped on the adjacent folding edges (24) available in unfolded condition on the other half of the folding stock.

**Revendications**

1. Feuille à plier rectangulaire pouvant être pliée par des bords de pliage se recoupant à plusieurs reprises à angle droit (1, 2, 3, 4) et par des entames de découpes (1′, 2′) partant du milieu des côtés d'une partie rectangulaire centrale entourée de sections de pliage de bords et de coins (7, 8), cependant que la pièce centrale présente des bords de pliage (1, 2) se croisant en son milieu (11) entre deux entames de découpes se faisant face (1′, 2′), caractérisée en ce que les sections de pliage de coins (8) sont réalisées chacune avec un bord de pliage découpé (3′).

2. Feuille à plier rectangulaire selon la revendication 1, caractérisée en ce que un pliage en zigzag (10) fait suite à un côté de bord de la partie centrale, pliage dont les bords de pliage sont également découpés entre les sections de pliage (7, 8) dans le prolongement des découpes.

3. Feuille à plier rectangulaire selon les revendications 1 et 2, caractérisée en ce que deux sections de pliage de bords (7) voisines sont renforcées et réalisées en tant que côté avant (20) ou arrière (21) d'une pile à plier.

4. Feuille à plier rectangulaire selon l'une ou plusieurs des revendications 1 à 3, caractérisée en ce que les deux sections de pliage situées à l'extérieur sur les quatre sections de pliage (12) de la partie centrale portent, lors du pliage, un revêtement de renforcement (13) qui présente, dans le bord de pliage (1) une fente (14) sur le dessus avec un écartement tel que les bords revêtus se touchent à l'état plié.

5. Feuille à plier rectangulaire selon l'une ou plusieurs des revendications 1 à 4, caractérisée en ce que les sections de pliage limitrophes (7, 8) de la partie centrale portent des deux côtés des revêtements de renforcement (15) formant des fentes (16) dont la largeur correspond approximativement au double des revêtements de renforcement (15) dans les bords de pliage (3, 4, 10).

6. Feuille à plier rectangulaire selon la revendication 5, caractérisée en ce que les sections de pliage situées entre les bords de pliage (10) portent également les revêtements de renforcement (15).

7. Feuille à plier rectangulaire selon les revendications 5 et 6, caractérisée en ce que les revêtements de renforcement (15) présentent des bords arrondis (17).

8. Feuille à plier rectangulaire selon l'une ou plusieurs des revendications 1 à 7, caractérisée en ce que des profilés en U (23) d'une longueur correspondant environ à celle du bord de pliage et pouvant être poussés, à l'état plié, sur les bords de pliage limitrophes (24) existant à l'état plié de la pile à plier sont introduits sur les bords (22) d'une moitié de la pile à plier.

Fig. 1

Fig.2
2
4
3
3
11
1
4

Fig. 3
13
14
13
13
13

Fig.4
15
17
16

Fig. 5
22
23
24